(19) Europäisches Patentamt / European Patent Office / Office européen des brevets

(11) **EP 2 747 174 B1**

(12) **EUROPEAN PATENT SPECIFICATION**

(45) Date of publication and mention
of the grant of the patent:
**16.03.2016 Bulletin 2016/11**

(51) Int Cl.:
*H01M 2/26* (2006.01)    *H01M 10/04* (2006.01)
*H01M 4/80* (2006.01)

(21) Application number: **13197930.4**

(22) Date of filing: **18.12.2013**

(54) **Electrode plate, layered electrode group, battery, and cylindrical battery**

Elektrodenplatte, geschichtete Elektrodengruppe und zylinderförmige Batterie

Plaque d'électrode, groupe d'électrodes enroulées, batterie et batterie cylindrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2012 JP 2012277045
19.12.2012 JP 2012277047**

(43) Date of publication of application:
**25.06.2014 Bulletin 2014/26**

(73) Proprietor: **GS Yuasa International Ltd.
Kisshoin, Minami-ku,
Kyoto-shi, Kyoto 601-8520 (JP)**

(72) Inventors:
• **Kanemoto, Manabu
Kyoto, 601-8520 (JP)**
• **Kodama, Mitsuhiro
Kyoto, 601-8520 (JP)**
• **Kakeya, Tadashi
Kyoto, 601-8520 (JP)**

(74) Representative: **Isarpatent
Patentanwälte Behnisch Barth Charles
Hassa Peckmann & Partner mbB
Friedrichstrasse 31
80801 München (DE)**

(56) References cited:
**EP-A2- 1 154 500      WO-A1-2013/018563
JP-A- 403 001 455      US-B1- 8 304 115**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This application claims the benefit of Japanese patent applications No. 2012-277045 and No. 2012-277047, filed on December 19, 2012.

FIELD

The present invention relates to an electrode plate and a layered electrode group, a battery, and a cylindrical battery formed by using the electrode plate.

BACKGROUND

As a conventional cylindrical battery, there is a cell including a circular columnar electrode group which is formed by winding band-shaped positive electrode plate and negative electrode plate into a spirally wound shape with a band-shaped separator sandwiched therebetween and which is housed in a cylindrical battery case (see JP-A-11-185767).
However, when the band-shaped positive electrode plate and negative electrode plate and the separator are wound into the spirally wound shape, displacement in winding of the positive electrode plate and the negative electrode may occur in a winding step. In this case, desired battery capacity of the cylindrical battery may not be obtained and internal short-circuit may be caused.

SUMMARY

The following presents a simplified summary of the invention disclosed herein in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.
To resolve the displacement in winding and to solve various problems caused by the displacement, the present inventor considers housing of a layered electrode group in a cylindrical battery.
However, when the layered electrode group is formed by a plurality of electrode plates, a plurality of collector terminals led out from the respective positive electrode plates are connected to a common collector plate in piles, and variations in current collecting efficiency may be caused between the respective positive electrode plates. Moreover, operation for welding the collector terminals of the respective positive electrode plates to the collector plate becomes complicated.
To solve these problems, a single thick electrode plate may be used to form an electrode group. However, it is difficult to compress the thick electrode plate under conventional pressing pressure, and filling density of active material is reduced. When the pressing pressure is increased in order to increase the filling density, the current collector may be ruptured or density of the current collector in the electrode plate may be reduced to increase internal resistance.
The present invention has been achieved to solve the above problems, and an object of the invention is to reduce internal resistance of an electrode plate while reducing the number of collector terminals and increasing a filling rate of active material in the entire electrode in a layered electrode group.
A first aspect of the invention is an electrode plate formed by current collectors retaining an active material, the electrode plate including a first plate element having an active material non-retaining portion, which does not retain the active material, and active material retaining portions in substantially flat plate shapes, which retain the active material and are formed on both sides of the active material non-retaining portion, the active material non-retaining portion being folded so that the active material retaining portions face each other, and a second plate element including an active material non-retaining portion, which does not retain an active material, and an active material retaining portion in a substantially flat shape, which retains the active material. The active material retaining portion of the second plate element is in contact with and superimposed on the active material retaining portions of the first plate element. The active material non-retaining portion of the second plate element is in contact with the active material non-retaining portion of the first plate element.

BRIEF DESCRIPTION OF THE DRAWINGS

The foregoing and other features of the invention will become apparent to one skilled in the art to which the present invention relates upon consideration of the invention with reference to the accompanying drawings, wherein:

Fig. 1 shows a vertical sectional view of a cylindrical battery in a first embodiment;
Fig. 2 shows a cross-sectional view of the cylindrical battery in the first embodiment;
Fig. 3 shows a plan view, a front view, and a perspective view illustrating a positive electrode plate in the first embodiment;
Fig. 4 shows a plan view illustrating a developed state of the positive electrode plate in the first embodiment;
Fig. 5 shows a manufacturing process of the positive electrode plate in the first embodiment;
Fig. 6 shows a plan view, a front view, and a perspective view illustrating a negative electrode plate in the first embodiment;
Fig. 7 shows a plan view illustrating a developed state of the negative electrode plate in the first embodiment;
Fig. 8 shows a manufacturing process of the negative electrode plate in the first embodiment;
Fig. 9 shows a vertical sectional view of an electrode group in the first embodiment;
Fig. 10 shows a separator housing step of the electrode group in the first embodiment;
Fig. 11 shows a negative electrode plate folding step and a positive electrode plate folding step of the electrode group in the first embodiment;
Fig. 12 shows a plan view, a front view, and a perspective view illustrating a positive electrode plate according to a variation of the first embodiment;
Fig. 13 shows a plan view, a front view, and a perspective view illustrating a positive electrode plate according to a variation of the first embodiment;
Fig. 14 shows a manufacturing process of the positive electrode plate according to the variation of the first embodiment;
Fig. 15 shows a plan view, a front view, and a perspective view illustrating a positive electrode plate in a second embodiment;

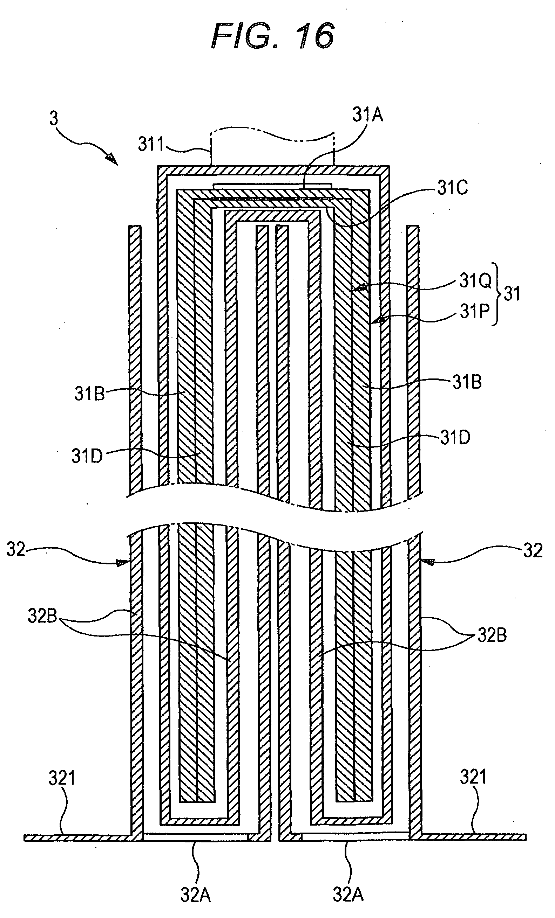

Fig. 16 shows a vertical sectional view of an electrode group in the second embodiment;
Fig. 17 shows a separator housing step of the electrode group in the second embodiment; and
Fig. 18 shows a plan view, a front view, and a perspective view illustrating a positive electrode plate according to a variation of the second embodiment.

## DETAILED DESCRIPTION

Aspects of the present invention will be described hereinafter.

An electrode plate according to a first aspect of the present invention is an electrode plate formed by current collectors retaining an active material, the electrode plate including a first plate element having an active material non-retaining portion, which does not retain the active material, and active material retaining portions in substantially flat plate shapes, which retain the active material and are formed on both sides of the active material non-retaining portion, the active material non-retaining portion being folded so that the active material retaining portions face each other, and a second plate element having an active material retaining portion, which does not retain an active material, and an active material retaining portion in a substantially flat shape, which retains the active material. The active material retaining portion of the second plate element is in contact with and superimposed on the active material retaining portions of the first plate element. The active material non-retaining portion of the second plate element is in contact with the active material non-retaining portion of the first plate element.

In this structure, the electrode plate is formed by the first plate element and the second plate element, and the first plate element is formed by the two active material retaining portions and the active material non-retaining portion. Therefore, by providing a collector terminal to the active material non-retaining portion, the two active material retaining portions can share the common collector terminal, which reduces the number of collector terminals to simplify welding operation. Here, because the active material retaining portion of the second plate element is in contact with the active material retaining portions of the first plate element, current collection of the second plate element can be carried out by the collector terminal of the first plate element. Furthermore, by dividing the electrode plate into the first plate element and the second plate element, it is possible to reduce thickness of the current collector of each of the plate elements to improve a filling rate of the positive active material into each of the current collectors. Moreover, by preventing rupture of the current collectors in pressing after filling of the active material and preventing reduction in density of the current collectors in the electrode plate, it is possible to suppress increase in the internal resistance of the electrode plate.

Furthermore, not only by bringing the active material retaining portions of the second plate element into contact with the active material retaining portions of the first plate element but also by bringing the active material non-retaining portion of the second plate element into contact with the active material non-retaining portion of the first plate element, it is possible to further improve current collecting efficiency of the second plate element.

Preferably, the active material retaining portion of the second plate element includes active material retaining portions in substantially flat plate shapes, which are formed on both sides of the active material non-retaining portion, the active material non-retaining portion being folded so that the active material retaining portions on the both sides face each other, and the active material retaining portions on the both sides of the second plate element are in contact with and superimposed on the active material retaining portions of the first plate element. In this case, the first plate element and the second plate element substantially in the same shape may be superimposed on each other, and then the superimposed plate elements may be folded at once, which improves workability. Moreover, because the second plate element is formed by a single plate element, the number of parts can be reduced. Furthermore, if the first plate element and the second plate element before welding of the collector terminal have the same shape, the number of parts can be further reduced.

Preferably, the active material non-retaining portion of the second plate element is not welded to the active material non-retaining portion of the first plate element. Because the first plate element and the second plate element are not welded to each other in this manner, assembly man-hours can be reduced. It is possible to secure sufficient current collecting performance with surface contact between the active material retaining portions of the first plate element and the second plate element without welding the active material non-retaining portion of the first plate element and the active material non-retaining portion of the second plate element.

Preferably, the current collectors are three-dimensional metal porous bodies such as foamed nickel porous bodies. Use of the three-dimensional metal porous bodies is excellent in that it is possible to make a manufacturing process simpler than when other collector substrates are used, and that satisfactory current collecting characteristics can be obtained and that it is possible to obtain higher capacity of the electrode even when active material with low electric conductivity is used.

An electrode plate according to a second aspect of the present invention includes a first plate element having two active material retaining bodies, which retain an active material, and a conductive member connecting the two active material retaining bodies, the conductive member being folded so that the two active material retaining bodies face each other, and a second plate element having an active material retaining portion, which retains an active material. The active material retaining portion of the second plate element is in contact with and superimposed on the active material retaining bodies of the first plate element.

In this electrode plate, the electrode plate is formed by the first plate element and the second plate element, and the first plate element is formed by the two active material retaining bodies and the conductive member. Because the conductive member is used as the collector terminal element, the two active material retaining bodies can share the common collector terminal, which reduces the number of collector terminals to simplify welding operation. Furthermore, by dividing the electrode plate into the first plate element and the second plate element, it is possible to reduce thickness of the current collector of each of the plate elements to improve a filling rate of the active material into each of the current collectors. Moreover, by preventing rupture of the current collectors in pressing after filling of the active material and preventing reduction in density of the current collectors in the electrode plate, it is possible to suppress increase in the internal resistance of the electrode plate.

An electrode plate according to a third aspect of the present invention is an electrode plate formed by current collectors retaining active material, the electrode plate including a first plate element having an active material non-retaining portion and active material retaining portions in substantially flat plate shapes and formed on both sides of the active material non-retaining portion, the active material non-retaining portion being folded so that the active material retaining portions on the both sides face each other, and a second plate element including an active material non-retaining portion and an active material retaining portion. The active material retaining portion of the second plate element may be in contact with and superimposed on the active material retaining portions of the first plate element, and the active material non-retaining portion of the first plate element and the active material non-retaining portion of the second plate element may be welded to each other.

In this structure, the electrode plate is formed by the first plate element and the second plate element, and the first plate element is formed by the two active material retaining portions and the active material non-retaining portion. By providing the collector terminal to the active material non-retaining portion, the two active material retaining portions can share the common collector terminal, which reduces the number of collector terminals to simplify welding operation. Here, because the active material retaining portion of the second plate element is in contact with the active material retaining portions of the first plate element, current collection of the second plate element can be carried out by the collector terminal of the first plate element. Furthermore, by dividing the electrode plate into the first plate element and the second plate element, it is possible to reduce thickness of the current collector of each of the plate elements to improve a filling rate of the active material into each of the current collectors. Moreover, by preventing rupture of the current collectors in pressing after filling of the active material, and preventing reduction in density of the current collectors in the electrode plate, it is possible to reduce the internal resistance of the electrode plate. Furthermore, because the second plate element is welded to the active material non-retaining portion of the first plate element, it is possible to further reduce the internal resistance of the electrode plate.

Preferably, the second plate element includes the active material non-retaining portion and active material retaining portions in substantially flat plate shapes and formed on both sides of the active material non-retaining portion, the active material non-retaining portion being folded so that the active material retaining portions on the both sides face each other, the active material retaining portions of the second plate element are in contact with and superimposed on the active material retaining portions of the first plate element, and the active material non-retaining portion of the second plate element is welded to the active material non-retaining portion of the first plate element. In this way, by forming the first plate element and the second plate element excluding the collector terminal in substantially the same shape, they may be superimposed on each other and then folded together, which improves workability. Here, by welding the active material non-retaining portion of the first plate element and the active material non-retaining portion of the second plate element before folding the first plate element and the second plate element, it is easier to fold the electrode plate. Moreover, because the second plate element is formed by a single plate element, the number of parts can be reduced. Furthermore, if the first plate element and the second plate element before welding of the collector terminal have the same shape, the number of parts can be further reduced.

Preferably, an electrode plate according to a fourth aspect of the present invention includes a first plate element having two active material retaining bodies and a conductive member connecting the two active material retaining bodies, the conductive member being folded so that the active material retaining bodies face each other, and a second plate element having an active material non-retaining portion and an active material retaining portion. The active material retaining portion of the second plate element is in contact with and superimposed on the active material retaining bodies of the first plate element, and the conductive member of the first plate element and the active material non-retaining portion of the second plate element are welded to each other.

In this electrode plate, the electrode plate is formed by the first plate element and the second plate element, and the first plate element is formed by the two active material retaining bodies and the conductive member. Because the conductive member is used as the collector terminal element, the two active material retaining bodies can share the common collector terminal, which reduces the number of collector terminals to simplify welding operation. Here, because the active material retaining portion of the second plate element is in contact with the active material retaining bodies of the first plate element, current collection of the second plate element can be carried out by the collector terminal of the first plate element. Furthermore, by dividing the electrode plate into the first plate element and the second plate element, it is possible to reduce thickness of the current collector of each of the plate elements to improve a filling rate of the active material into each of the current collectors. Moreover, by preventing rupture of the current collectors in pressing after filling of the active material, and preventing reduction in density of the current collectors in the electrode plate, it is possible to reduce the internal resistance of the electrode plate. Furthermore, because the second plate element is welded to the conductive member of the first plate element, it is possible to further reduce the internal resistance of the electrode plate.

A structure of an electrode group according to a fifth aspect of the present invention, for which the electrode plate according to the aspects of the present invention can be suitably used, is an electrode group having a layered structure formed by sandwiching an electrode plate of a different polarity between the active material retaining portions on the both sides with a separator interposed therebetween. The electrode plate in the fifth aspect of the present invention has the structure, in which the active material retaining bodies are formed on the both sides of the active material non-retaining portion which is linearly formed or the collector terminal and the active material non-retaining portion or the collector terminal is folded, and the active material retaining portions which face each other as a result of the folding have the same polarity. With this structure, it is possible to form the layered electrode group by only sandwiching the electrode plate of the different polarity between the active material retaining portions facing each other. As the electrode plate of the different polarity, a pocket-type electrode, an electrode formed by filling the active material into a three-dimensional substrate such as foamed nickel, or an electrode formed by coating a two-dimensional substrate such as a perforated steel sheet with the active material may be used. At this time, a single negative electrode plate and a single positive electrode plate form a layered electrode group.

A specific structure of the layered electrode group includes a first electrode plate formed by the electrode plate according to the aspects of the present invention, a separator folded in half to sandwich both faces of the first electrode plate in a developed state of the first electrode plate, and a second electrode plate which is provided to sandwich an electrode structure formed by folding the first electrode plate wrapped in the separator, and which has a polarity different from the first electrode plate.

Preferably, the electrode group having the layered structure and formed by using the electrode plate according to the aspects of the present invention is formed as a cylindrical battery housed in a cylindrical battery case. In the conventional electrode group wound into the spirally wound shape, displacement in winding of the positive electrode plate and the negative electrode plate may occur in the winding step. As a result, desired battery capacity of the cylindrical battery may not be obtained and internal short-circuit may be caused. However, by housing the electrode group having the layered structure into the cylindrical battery case as in the present invention, it is possible to resolve the displacement in winding of the electrode group and to solve various problems caused by the displacement. Moreover, because of the cylindrical battery case, it is possible to enhance strength against increase in the internal pressure. Furthermore, because the substantially rectangular parallelepiped electrode group is disposed in the cylindrical battery case, used amounts of the substrate and the separator are reduced, which increases space in the battery case to prevent increase in the battery internal pressure and also increase an amount of electrolyte solution in the cylindrical battery.

<First Embodiment>

A first embodiment of the cylindrical battery according to the first aspect of the present invention will be described below with reference to the drawings.

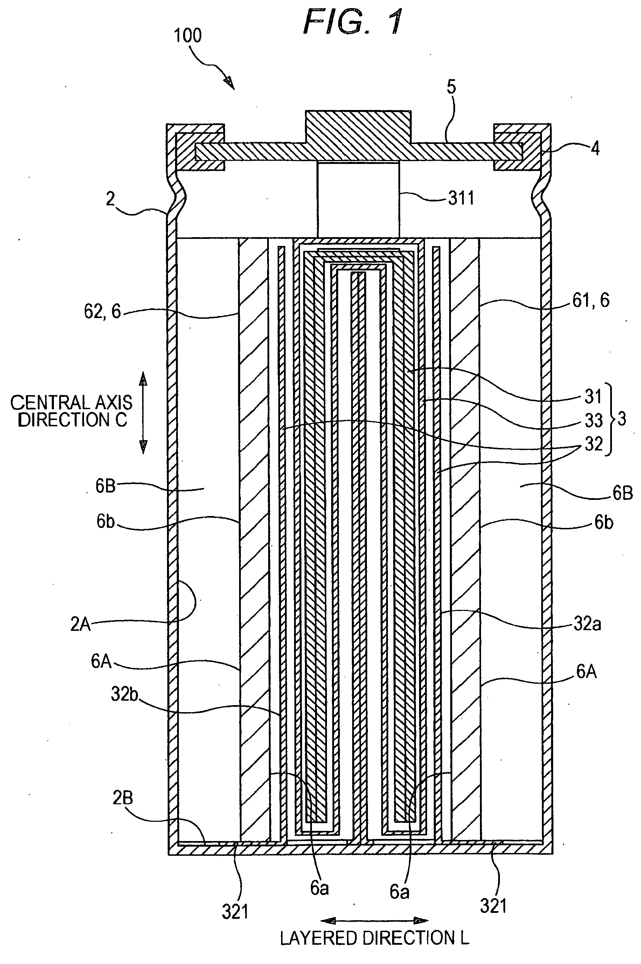

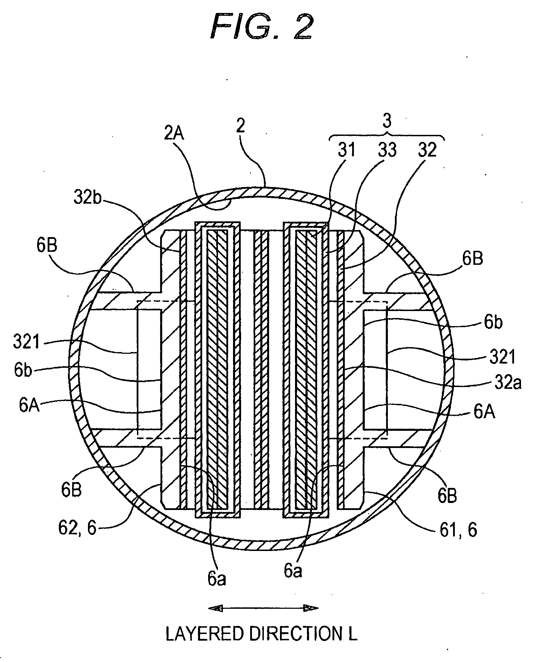

A cylindrical battery 100 according to this embodiment is an alkaline storage battery such as a nickel-cadmium storage battery and a nickel-hydride storage battery, for example. Specifically, as shown in Figs. 1 and 2, the cylindrical battery 100 includes a metal battery case 2 having a cylindrical shape with a bottom and a substantially rectangular parallelepiped electrode group 3 disposed in the battery case 2. The electrode group 3 is formed by a positive electrode plate 31, a negative electrode plate 32, and a separator 33.

The battery case 2 has the nickel-plated cylindrical shape with the bottom, and an upper opening is sealed with a sealing body 5 with an insulating body 4 interposed therebetween, as shown in Fig. 1. A collector terminal 311 provided to protrude from an upper end portion of the positive electrode plate 31 is connected to a back face of the sealing body 5 directly by welding or with a collector plate (not shown) interposed therebetween, for example, and the sealing body 5 serves as a positive electrode terminal. In this embodiment, as will be described later, a collector terminal 321 of the negative electrode plate 32 positioned on an outermost side of the electrode group 3 is welded to a bottom face 2B of the battery case 2.

The electrode group 3 has a substantially rectangular parallelepiped shape formed by laminating the positive electrode plate 31 and the negative electrode plate 32 with the separator 33 made of polyolefin nonwoven fabric, for example, interposed therebetween (see Fig. 2). The separator 33 is impregnated with electrolyte solution such as potassium hydroxide, for example.

The positive electrode plate 31 is formed by a positive current collector made of foamed nickel and a mixture (hereinafter, simply referred to as a positive active material) of nickel hydroxide active material and a cobalt compound, which is conductive material, filled into a hollow in the positive current collector. The nickel hydroxide active material is nickel hydroxide, for example, in the case of the nickel-cadmium rechargeable cell, and is nickel hydroxide to which calcium hydroxide is added, for example, in the case of the nickel-hydride rechargeable cell.

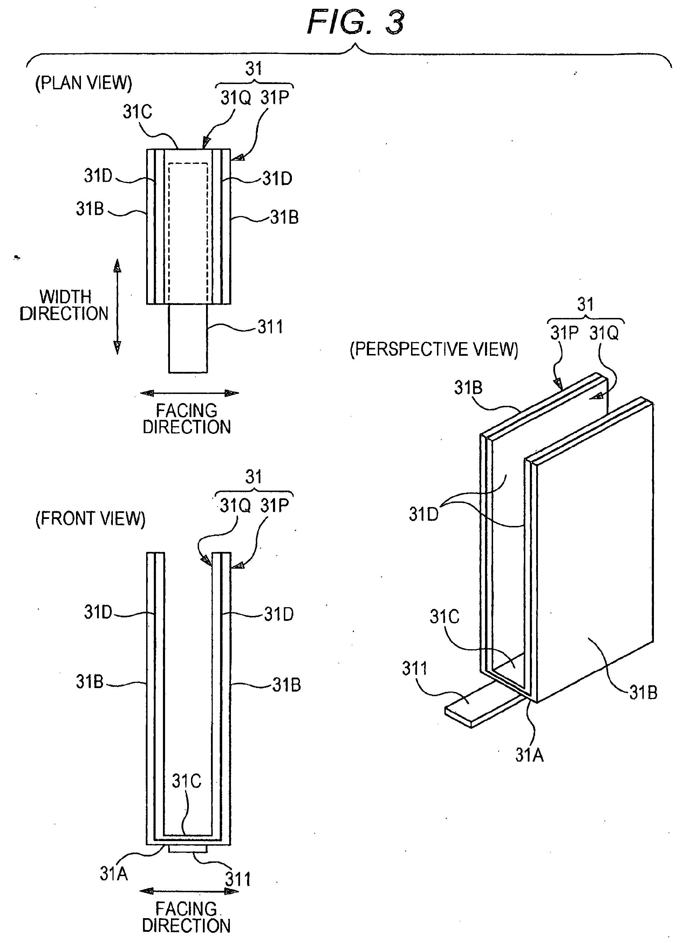

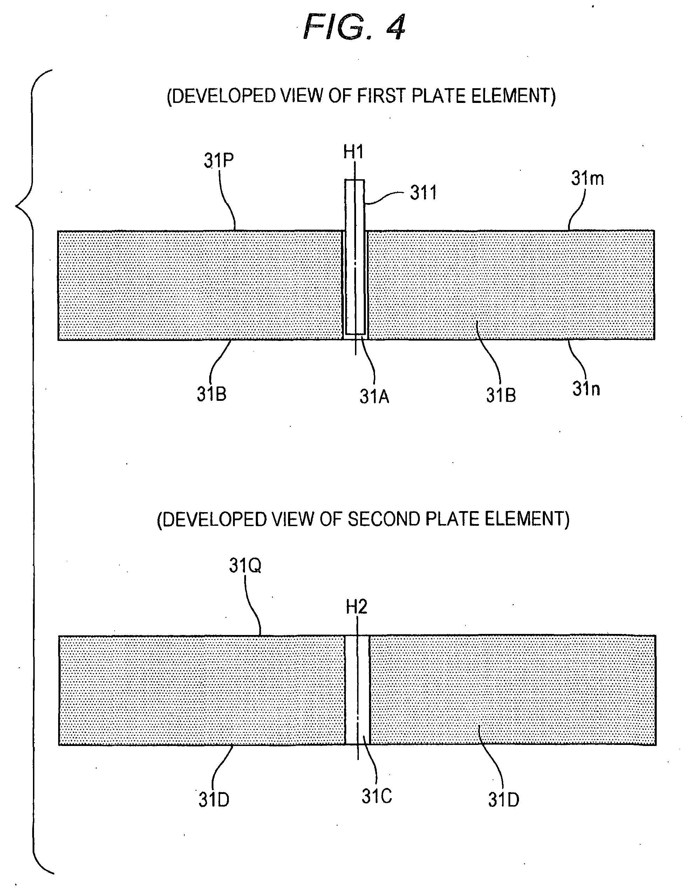

Specifically, the positive electrode plate 31 is formed by a first plate element 31P having the collector terminal 311 and a second plate element 31Q not having the collector terminal 311, as shown in Figs. 3 and 4.

As shown in Figs. 3 and 4, the first plate element 31P includes an active material non-retaining portion 31A which is linearly formed and not retaining the positive active material and active material retaining portions 31B formed on both sides of the active material non-retaining portion 31A and retaining the positive active material. The active material non-retaining portion 31A is formed bilaterally symmetrically while including a center line H1 of the positive current collector, and the active material retaining portions 31B are bilaterally symmetric with respect to the active material non-retaining portion 31A (see Fig. 4).

As shown in Fig. 3, the positive current collector of the first plate element 31P is folded into a substantially U-shape at the active material non-retaining portion 31A so that the active material retaining portions 31B on the both sides face each other. Specifically, the positive current collector is folded along boundaries between the active material non-retaining portion 31A and the active material retaining portions 31B or along lines on slightly inner sides of the boundaries as folding lines so that the active material non-retaining portion 31A and the active material retaining portions 31B form right angles.

Moreover, the first plate element 31P is provided at the active material non-retaining portion 31A, which is the folded portion formed between the two active material retaining portions 31B, with the collector terminal 311 formed by a nickel steel sheet, for example. The collector terminal 311 extends outward toward one side in a width direction orthogonal to a direction in which the two active material retaining portions 31B face each other. In Fig. 3, the collector terminal 311 extends outward toward one side (front side in Fig. 3) along the same direction as a linear direction of the active material non-retaining portion 31A. The collector terminal 311 may be slanted from the linear direction. The collector terminal 311 is provided along substantially the entire active material non-retaining portion 31A so as to increase current collecting efficiency from the positive current collector. In this manner, the collector terminal 311 is provided to extend outward toward one side in the width direction orthogonal to the direction in which the two active material retaining portions 31B face each other. Therefore, if a folded portion of the separator 33 is positioned at a side 31n facing a side 31m, from which the collector terminal 311 extends outward, when the separator 33 folded in half houses the developed positive electrode plate 31 to sandwich the positive electrode plate 31, the collector terminal 311 does not obstruct housing by the separator 33.

As shown in Figs. 3 and 4, the second plate element 31Q includes the active material non-retaining portion 31C which is linearly formed and not retaining the positive active material and the active material retaining portions 31D formed on both sides of the active material non-retaining portion 31C and retaining the positive active material. The active material non-retaining portion 31C is formed bilaterally symmetrically while including a center line H3 of the positive current collector, and the active material retaining portions 31D are bilaterally symmetric with respect to the active material non-retaining portion 31C (see Fig. 4). The developed shape of the second plate element 31Q in this embodiment is substantially the same as that of the first plate element 31P before welding of the collector terminal 311.

As shown in Fig. 3, the positive current collector of the second plate element 31Q is folded into a substantially U-shape at the active material non-retaining portion 31C so that the opposite active material retaining portions 31D face each other. Specifically, the positive current collector is folded along boundaries between the active material non-retaining portion 31C and the active material retaining portions 31D or along lines on slightly inner sides of the boundaries as folding lines so that the active material non-retaining portion 31C and the active material retaining portions 31D form right angles.

The first plate element 31P and the second plate element 31Q having the above structures form the positive electrode plate 31 with their active material non-retaining portions 31A and 31C positioned at the same side portion and superimposed on each other, and their active material retaining portions 31B and 31D on the both sides in contact with and superimposed on each other (see Fig. 3). In the first plate element 31P and the second plate element 31Q superimposed on each other in this manner, their active material non-retaining portions 31A and 31C are not welded to each other. In other words, in the positive electrode plate 31 in this embodiment, the collector terminal 311 of the first plate element 31P carries out current collection of the second plate element 31Q only by contact between the first plate element 31P and the second plate element 31Q.

Next, a method for manufacturing the positive electrode plate 31 (the first plate element 31P and the second plate element 31Q) formed in this manner will be described briefly.

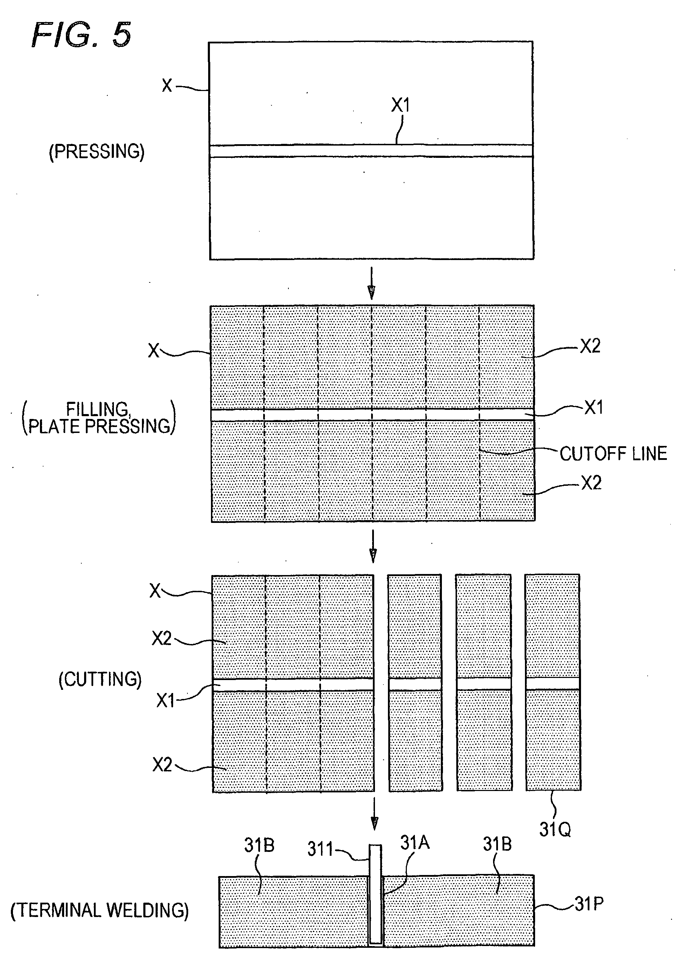

First, as shown in Fig. 5, a central portion (non-retaining area X1) which is to be the active material non-retaining portion, which is linearly formed, of the base material (collector substrate) X made of foamed nickel in a long shape is pressed along a longitudinal direction of the collector substrate X (a pressing step). Next, the positive active material is filled so as to form areas other than the non-retaining area X1 into the active material retaining areas (retaining areas X2) (an active material filling step). After the active material filling step, the entire collector substrate is pressed (a plate pressing step). Then, the base material X is cut in directions orthogonal to the non-retaining area X1 into the same shape as the developed shapes of the first plate element 31P (excluding the terminal 311) and the second plate element 31Q (a cutting step). In this way, the first plate element 31P before welding of the collector terminal 311 and the second plate element 31Q in the developed state are formed. The collector terminal 311 is welded to the active material non-retaining portion 31A of the positive current collector which is to be the first plate element 31P (a terminal welding step). In this way, the first plate element 31P in the developed state is formed.

Then, by superimposing the first plate element 31P and the second plate element 31Q on each other so that their outer periphery portions are substantially aligned with each other, the positive electrode plate 31 in the developed state is formed.

According to the above-described method, the active material non-retaining portions 31A and 31C are formed without filling the positive active material into the base material X, and the active material retaining portions 31B and 31D are formed on both sides of these active material non-retaining portions 31A and 31C. Therefore, rates of elongation of the active material retaining portions 31B and 31D and those of the active material non-retaining portions 31A and 31C are different, and the base material X may rupture at the boundary portions. Thus, employment of the following method is conceivable. In other words, the positive active material is filled into the entire base material X (collector substrate) made of foamed nickel (an active material filling step). After the active material filling step, the entire collector substrate X is pressed (a plate pressing step). Next, in order to form the non-retaining area X1 which is to be the active material non-retaining portion 31A which is linearly formed at a central portion of the base material X filled with the positive active material, the positive active material is removed by ultrasonic removal or the like (an active material removing step). Then, the non-retaining area X1 of the base material X on which the non-retaining area X1 is formed is pressed (a pressing step). Then, the base material X on which the non-retaining area X1 is pressed is cut in directions orthogonal to the non-retaining area X1 (a cutting step). In this way, the second plate element 31Q in the developed state is formed. The collector terminal 311 is welded to the active material non-retaining portion 31A of the positive current collector which is to be the first plate element 31P (a terminal welding step). In this way, the first plate element 31P in the developed state is formed.

The cutting step may be carried out between the plate pressing step and the active material removing step. In other words, the positive active material is filled into the entire base material X (collector substrate) made of foamed nickel (an active material filling step). After the active material filling step, the entire collector substrate X is pressed (a plate pressing step). Then, the pressed base material X is cut into the developed shapes of the first plate element 31P (excluding the terminal 311) and the second plate element 31Q (a cutting step). Then, in order to form the non-retaining area X1 which is to be the active material non-retaining portion 31A which is linearly formed at a central portion of the cut base material X, the positive active material is removed by ultrasonic removal or the like (an active material removing step). Then, the non-retaining area X1 of the base material X on which the non-retaining area X1 is formed is pressed (a pressing step). In this way, the second plate element 31Q in the developed state is formed. The collector terminal 311 is welded to the active material non-retaining portion 31A of the positive current collector which is to be the first plate element 31P (a terminal welding step).

The negative electrode plate 32 is formed by a negative current collector formed by a nickel-plated perforated steel sheet having a flat plate shape and a negative active material applied on the negative current collector, for example. The negative active material is a mixture of cadmium oxide powder and metallic cadmium powder, for example, in the case of the nickel-cadmium rechargeable cell, and is mainly AB5-type (rare earth) or AB2-type (Laves phase) hydrogen storage alloy powder, for example, in the case of nickel-hydride rechargeable cell.

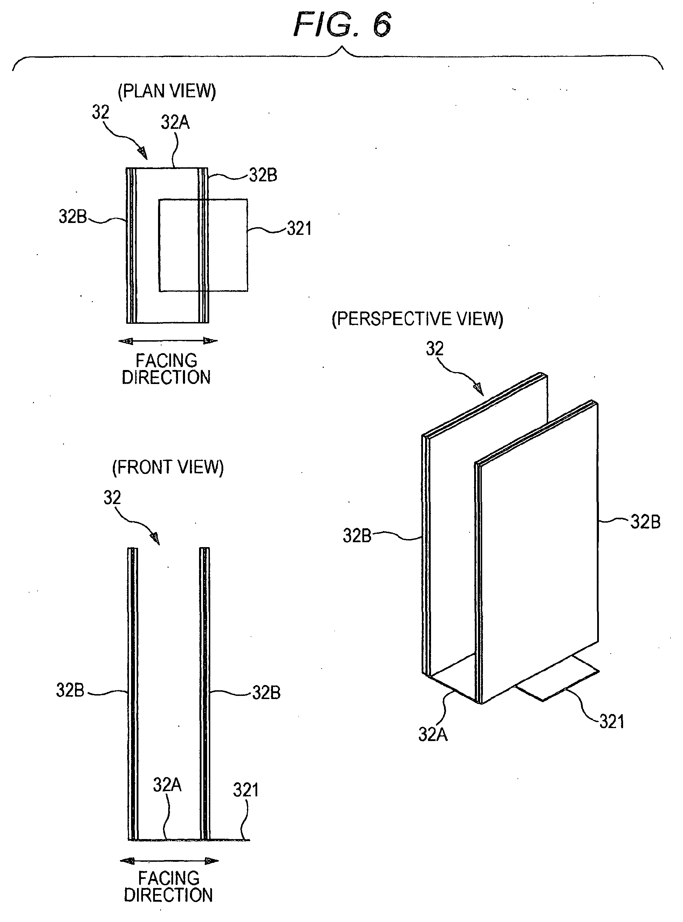

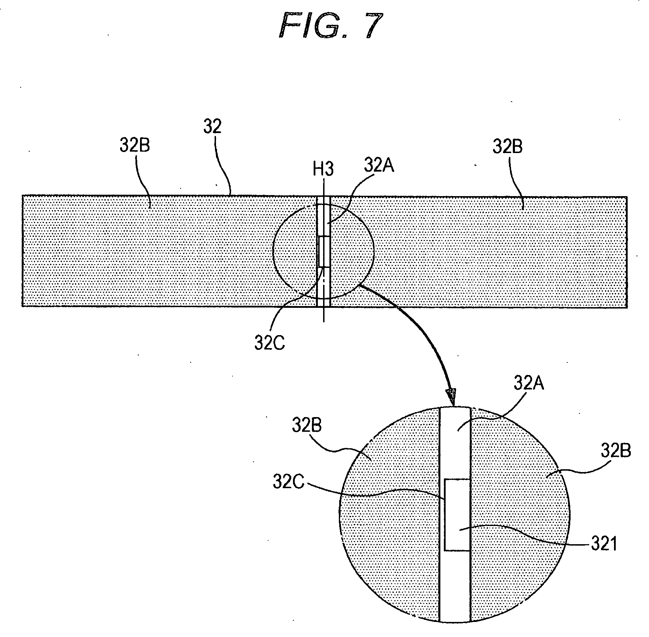

Specifically, as shown in Figs. 6 and 7, the negative electrode plate 32 includes the active material non-retaining portion (uncoated portion) 32A which is linearly formed and not retaining the negative active material, and the active material retaining portions (coated portions) 32B formed on both sides of the active material non-retaining portion 32A and retaining the negative active material. The active material non-retaining portion 32A is formed bilaterally symmetrically while including a center line H3 of the negative current collector, and the active material retaining portions 32B are bilaterally symmetric with respect to the active material non-retaining portion 32A (see Fig. 7).

As shown in Fig. 6, the negative current collector of the negative electrode plate 32 is folded into a substantially U-shape at the active material non-retaining portion 32A so that the active material retaining portions 32B on the both sides face each other. Specifically, the negative current collector is folded along boundaries between the active material non-retaining portion 32A and the active material retaining portions 32B or along lines on slightly inner sides of the boundaries as folding lines so that the active material non-retaining portion 32A and the active material retaining portions 32B form right angles.

Furthermore, the collector terminal 321 to be connected by welding to the bottom face 2B of the battery case 2 is formed at the negative electrode plate 32 by folding a portion of the active material non-retaining portion 32A outward. Specifically, a cut 32C is formed at the portion of the active material non-retaining portion 32A so that a desired shape of the collector terminal is formed, and an inner portion of the cut 32C is folded outward to form the collector terminal 321.

Next, a method for manufacturing the negative electrode plate 32 formed in this manner will be described briefly.

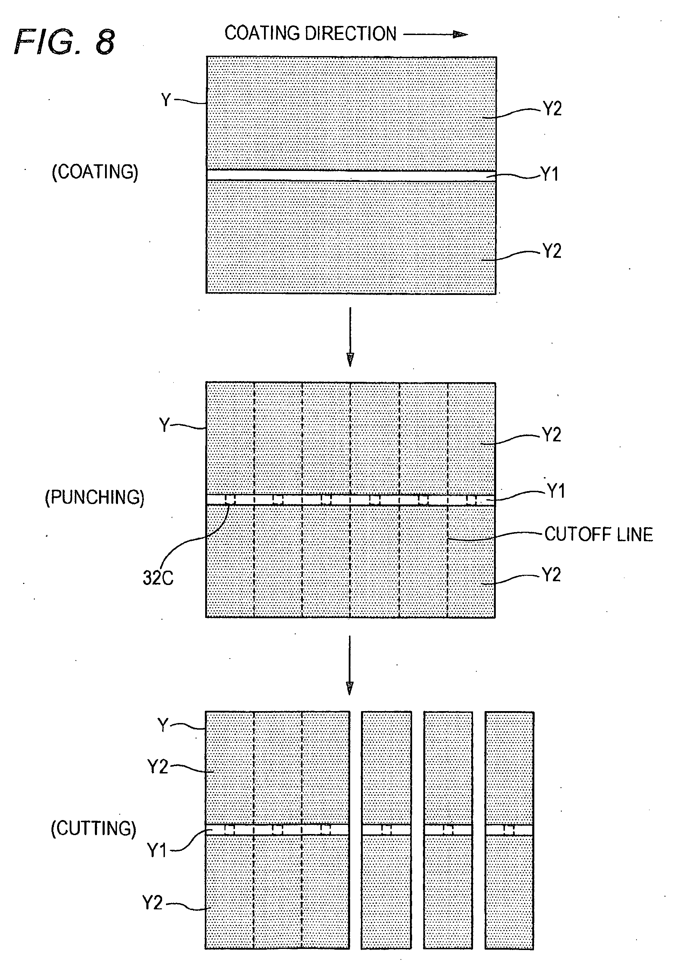

First, as shown in Fig. 8, the negative active material is applied on both sides of the long base material (collector substrate) Y formed by the perforated steel sheet while leaving a uncoated area Y1 which is linearly formed at a central portion along a longitudinal direction of the base material Y, to thereby form coated areas Y2 and Y3 (a coating step). Then, substantially U-shaped cuts 32C are formed by punching by using a punch die in the uncoated area Y1 (a punching step). Then, the base material Y is cut into the same shape as the developed shape of the negative electrode plate 32 (a cutting step).

In this way, the negative electrode plate 32 in the developed state is formed. The cut 32C may be formed after cutting the negative electrode plate 32.

The layered electrode group 3 in this embodiment is formed by laminating the substantially U-shaped positive electrode plate 31 and the substantially U-shaped negative electrode plates 32 in such a manner that the positive electrode plate 31 and the negative electrode plates 32 are engaged with each other. In the positive electrode plate 31, the two active material retaining portions 31B (31D) are disposed to face each other. In the negative electrode plate 32, the two active material retaining portions 32B are disposed to face each other.

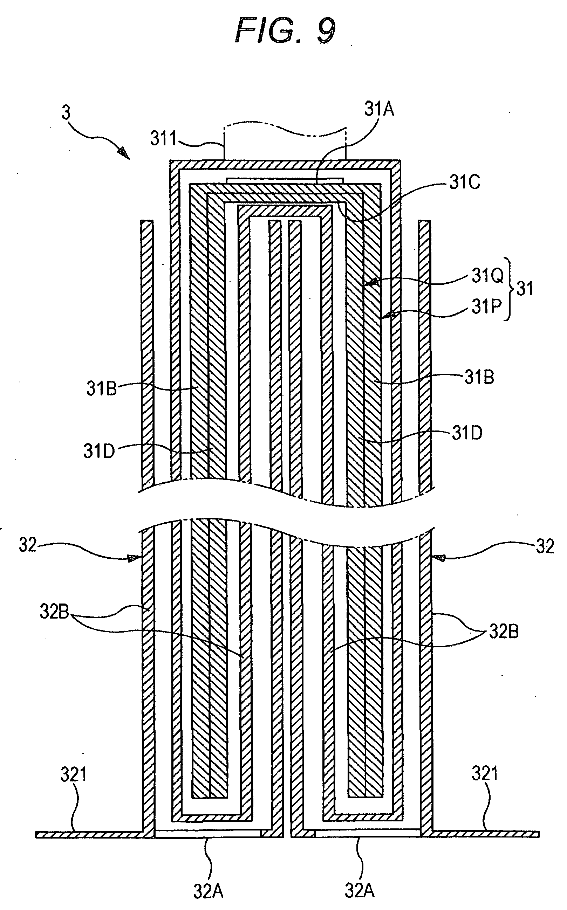

Specifically, as shown in Fig. 9, the positive electrode plate 31 and the negative electrode plates 32 are layered so that the one active material retaining portion 31B (31D) of the positive electrode plate 31 is sandwiched between the two active material retaining portions 32B of the negative electrode plate 32, and that the one active material retaining portions 32B of the negative electrode plates 32 are sandwiched between the two active material retaining portions 31B (31D) of the positive electrode plate 31. In this embodiment, the positive electrode plate 31 and the negative electrode plates 32 are layered so that the folded portion (active material non-retaining portion 31A (31C)) of the positive electrode plate 31 and the folded portion (active material non-retaining portion 32A) of the negative electrode plate 32 face each other. Therefore, in the electrode group 3 in this embodiment, outer faces 32a and 32b of the negative electrode plate 32 are outermost faces. Although spaces are provided between the respective plates 31 and 32 and the separator 33 in Figs. 1, 2, 9, and the like so as to facilitate understanding, they are layered in contact with each other.

More specifically, the layered electrode group 3 in this embodiment is formed by the two negative electrode plates 32 and the one positive electrode plate 31. The negative electrode plates 32 and the positive electrode plate 31 are layered so that the one active material retaining portions 32B (the adjacent active material retaining portions 32B of the two negative electrode plates 32) of the respective two adjacent negative electrode plates 32 are sandwiched between the two active material retaining portions 31B (31D) of the one positive electrode plate 31.

Next, the method for manufacturing the layered electrode group 3 formed in this manner will be described.

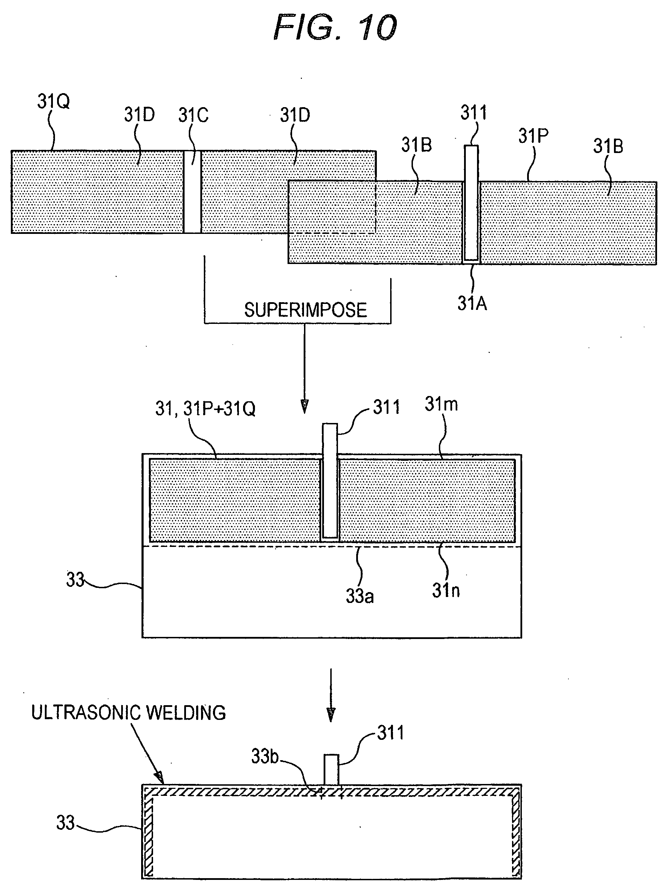

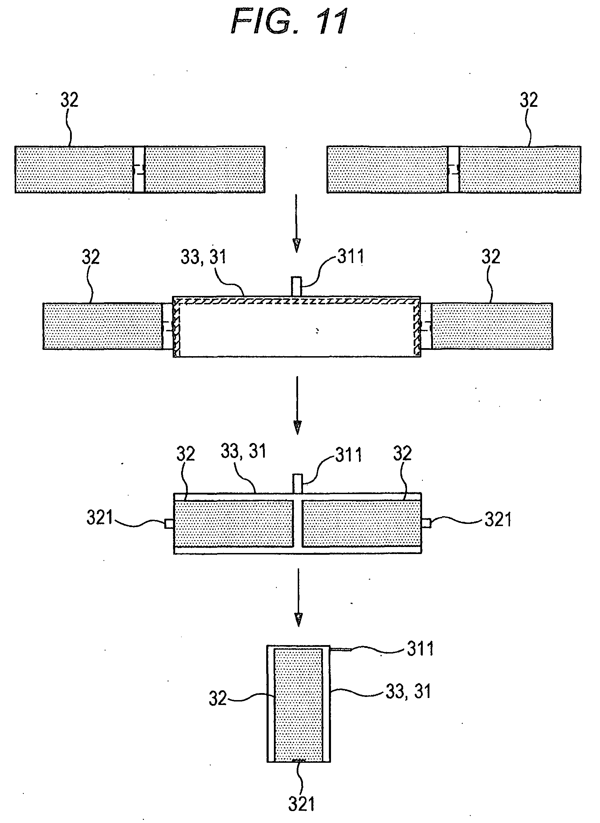

First, as shown in Figs. 10 and 11, the first plate element 31P in the developed state, the second plate element 31Q in the developed state, the negative electrode plates 32 in the developed states, and the separator 33 in the developed state are prepared. Then, as shown in Fig. 10, the developed positive electrode plate 31, formed by superimposing the developed first plate element 31P and second plate element 31Q, is placed on a half face on one side of a folding line 33a of the separator 33. At this time, the positive electrode plate 31 is placed so that the side (lower side 31n) facing the side (upper side 31m) from which the collector terminal 311 extends outward is placed along the folding line 33a of the separator 33. Then, the separator 33 is folded in half along the folding line 33a (a separator housing step). As a result, a folded portion of the separator 33 is positioned on the lower side 31n of the positive electrode plate 31, and the developed positive electrode plate 31 excluding a portion of the collector terminal 311 extending outward is housed in the separator 33. Then, three sides excluding the positive electrode terminal portion of the separator 33 housing the positive electrode plate 31, i.e., the upper side and the left and right sides are welded and fixed by ultrasonic welding or the like.

Note that a cut 33b is formed at a portion of the separator 33 corresponding to the collector terminal portion of the positive electrode plate 31. In this way, curling of the separator 33 due to deformation of the collector terminal 311 is prevented when the collector terminal 311 is folded. It is also possible to use an envelope-shaped separator 33 with three sides closed in advance to wrap the positive electrode plate 31.

Next, as shown in Fig. 11, the two active material retaining portions 31B (31D) provided on left and right sides of the developed positive electrode plate 31 housed in the separator 33 and the one active material retaining portions 32B of the developed negative electrode plates 32 are superimposed. Then, the developed negative electrode plates 32 are folded into the substantially U-shapes to thereby sandwich the two active material retaining portions 31B (31D) of the positive electrode plate 31 (a negative electrode plate folding step). At this time, the collector terminals 321 are folded outward from the active material non-retaining portions 32A of the negative electrode plates 32. Then, the positive electrode plate 31 with its left and right sides sandwiched by the negative electrode plates 32 is folded into the substantially U-shape (a positive electrode plate folding step). In this way, the layered electrode group 3 is formed. A binding tape (not shown) is wound about the layered electrode group 3 formed in this manner so that the layered electrode group 3 does not fall apart.

The cylindrical battery 100 in this embodiment includes spacers 6 for fixing the electrode group 3, as shown in Figs. 1 and 2. The spacers 6 are paired spacers 61 and 62 provided between an inner peripheral face 2A of the battery case 2 and outer faces of the electrode group 3 to fix the electrode group 3 to the battery case 2. The paired spacers 61 and 62 are disposed in spaces between the inner peripheral face 2A of the battery case 2 and the outer faces of the electrode group 3 to sandwich the electrode group 3 from a laminating direction L. The laminating direction L is a direction in which the active material retaining portions 31B and 32B of the respective plates 31 and 32 face each other.

The paired spacers 61 and 62 are made of resin such as acrylic resin, polypropylene resin, and nylon resin, or metal such as stainless steel, and have the same shape.

The respective spacers 61 and 62 press substantially the entire outermost faces (specifically, the outer faces 32a and 32b of the negative electrode plates 32), in the laminating direction L, of the electrode group 3. The respective spacers 61 and 62 are in contact with the inner peripheral face of the battery case 2 from an upper portion to a lower portion. In this way, the entire electrode group 3 is uniformly pressed by the paired spacers 61 and 62 and charging and discharging efficiency increases. A specific shape of each of the spacers includes an electrode contact portion 6A in a rectangular flat plate shape having, on one face 6a thereof, a contact face to be in contact with substantially the entire outer face 32a or 32b of the negative electrode plate 32, and two case contact portions 6B extending from the other face 6b of the electrode contact portion 6A to be in contact with the inner peripheral face 2A of the battery case 2.

The two case contact portions 6B are formed parallel to each other along a central axis direction C on the other face 6b of the electrode contact portion 6A. Specifically, the case contact portions 6B are formed symmetrically in such a manner as to sandwich a central axis of the battery case 2 when housed in the battery case 2. Moreover, a contact portion (a tip end face of a free end portion) of each of the case contact portions 6B in contact with the inner peripheral face 2A of the battery case 2 has substantially the same curved face as a curved face of the inner peripheral face 2A of the battery case 2. In this way, the case contact portions 6B and the battery case 2 come in surface contact with each other (see Fig. 2). Furthermore, a recessed portion formed between the electrode contact portion 6A and the case contact portions 6B serves as a welding space, and it is possible to weld the collector terminal 321 of the negative electrode plate 32 to the bottom face 2B of the battery case 2 by using this welding space.

Because the electrode group 3 is pressed by the spacers 61 and 62 in this manner, the active material retaining portions 31B of the first plate element 31P of the positive electrode plate 31 and the active material retaining portions 31D of the second plate element 31Q come into pressed contact with each other, and electric conductivity of the first plate element 31P and the second plate element 31Q is improved. Because the first plate element 31P and the second plate element 31Q come into pressed contact, it is possible to efficiently carry out current collection of the second plate element 31Q with the collector terminal 311 of the first plate element 31P.

Next, a method for manufacturing the cylindrical battery 100 formed in this manner will be described briefly.

The layered electrode group 3 described above is sandwiched between the paired spacers 61 and 62 from the laminating direction L. A structure formed in this manner is disposed in the battery case 2. In the disposed state, the collector terminals 321 of the negative electrode plates 32 are positioned between the two case contact portions 6B of the paired spacers 61 and 62, and lower faces of the case contact portions 6B of the spacers 61 and 62 retain portions of the collector terminal 321 onto the bottom face 2B of the battery case 2. Alternatively, the paired spacers 61 and 62 may be housed to sandwich the electrode group 3 after the electrode group 3 is housed into the battery case 2. Then, with the electrode group 3 fixed into the battery case 2, a welding rod is inserted into spaces formed between the case contact portions 6B of the spacers 61 and 62 and the inner peripheral face 2A of the battery case 2 to weld and connect the collector terminals 321 of the negative electrode plates 32 to the bottom face 2B of the battery case 2. Then, electrolyte solution is filled into the battery case 2. After filling of the electrolyte solution, the collector terminal 311 of the positive electrode plate 31 is connected to the back face of the sealing body 5 directly or with the collector plate (not shown) interposed therebetween, and the sealing body 5 is fixed to the upper opening of the battery case 2 by caulking or the like with the insulating body 4 interposed therebetween.

<Effects of the Embodiment>

With the cylindrical battery 100 according to this embodiment formed in this manner, because the positive electrode plate 31 (first plate element 31P) has the substantially U-shape formed by the two active material retaining portions 31B and the active material non-retaining portion 31A, and the active material non-retaining portion 31A is provided with the collector terminal 311, the common collector terminal 311 carries out the current collection of the two active material retaining portions 31B to suppress variations in current collecting efficiency to thereby improve the current collecting efficiency. Moreover, the two active material retaining portions 31B can share the common collector terminal 311, which reduces the number of collector terminals 311 to be welded to simplify welding operation. Furthermore, by dividing the positive electrode plate 31 into the first plate element 31P and the second plate element 31Q, it is possible to reduce thickness of the positive current collectors in the respective plate elements 31P and 31Q to improve the filling rates of the positive active material into the respective positive current collectors. Moreover, by preventing rupture of the positive current collector in pressing after filling of the active material and preventing reduction in density of the positive current collector in the positive electrode plate 31, it is possible to suppress increase in the internal resistance of the positive electrode plate 31.
In this embodiment, because the first plate element 31P excluding the collector terminal 311 and the second plate element 31Q have the same shape, the active material retaining portions 31D of the second plate element 31Q are brought into contact with and superimposed on the respective active material retaining portions 31B on the both sides of the first plate element 31P, and the collector terminal 311 of the first plate element 31P can improve current collecting efficiency of the second plate element 31Q. Because the first plate element 31P excluding the collector terminal 311 and the second plate element 31Q have the same shape, they may be superimposed and then folded into the U-shape, which improves workability. Moreover, because the second plate element 31Q is formed by a single plate element, the number of parts can be reduced. Furthermore, because the first plate element 31P before welding of the collector terminal 311 and the second plate element 31Q have the same shape, the number of parts can be further reduced.
Moreover, because the first plate element 31P and the second plate element 31Q are not welded to each other, assembly man-hours can be reduced. In this embodiment, because the spacers 61 and 62 press and fix the electrode group 3, it is possible to secure sufficient current collecting performance with surface contact between the active material retaining portions 31B and 31D of the first plate element 31P and the second plate element 31Q without welding the active material non-retaining portion 31A of the first plate element 31P and the active material non-retaining portion 31C of the second plate element 31Q to each other.

<Second Embodiment>

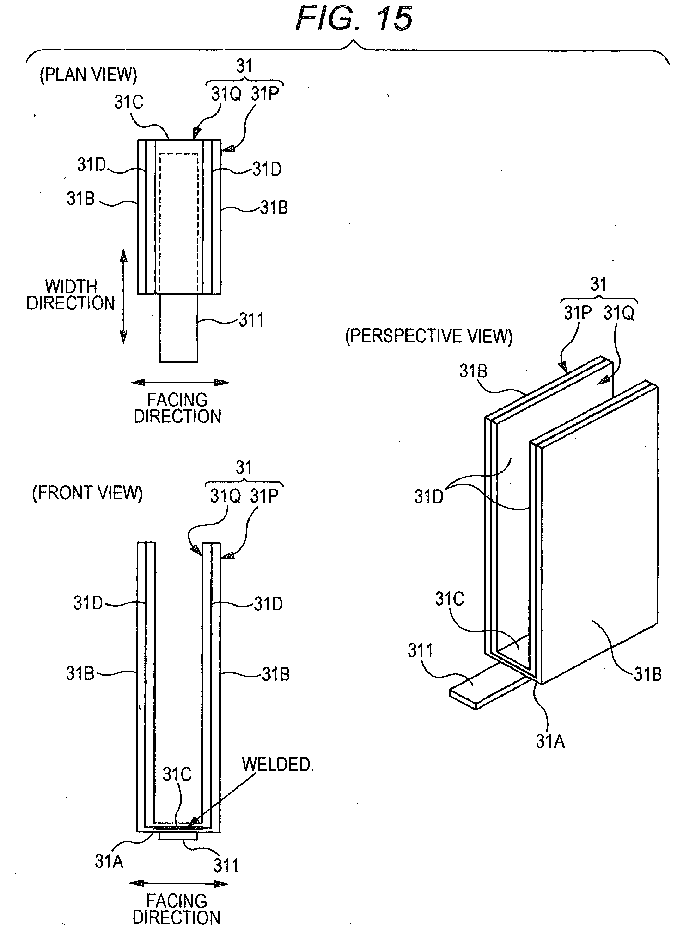

Although the positive electrode plate 31 in the second embodiment is different from the positive electrode plate 31 in the first embodiment in that the active material non-retaining portion 31A of the first plate element 31P and the active material non-retaining portion 31C of the second plate element 31Q are welded to each other, they are the same as each other in battery components such as the negative electrode plates other than the positive electrode plate. Therefore, for description of the battery components other than the positive electrode plate, the description in the first embodiment can be used.
The first plate element 31P and the second plate element 31Q in the second embodiment form the positive electrode plate 31 with their active material non-retaining portions 31A and 31C positioned on the same side and superimposed on each other, and their active material retaining portions 31B and 31D on the both sides in contact with and superimposed on each other (see Fig. 15). In the first plate element 31P and the second plate element 31Q superimposed on each other in this manner, their active material non-retaining portions 31A and 31C are welded to each other. In other words, in the positive electrode plate 31 in this embodiment, the collector terminal 311 of the first plate element 31P carries out the current collection of the second plate element 31Q not only with contact between the first plate element 31P and the second plate element 31Q but also with welding of the active material non-retaining portions 31A and 31C to each other.

Next, a method for manufacturing the positive electrode plate 31 (the first plate element 31P and the second plate element 31Q) formed in this manner will be described briefly.

First, as shown in Fig. 5, a central portion which is to be the active material non-retaining portion (non-retaining area X1), which is linearly formed, of the base material (collector substrate) X made of foamed nickel in a long shape is pressed along a longitudinal direction of the base material X (a pressing step). Next, the positive active material is filled so as to form areas other than the non-retaining area X1 into the active material retaining areas (retaining areas X2) (an active material filling step). After the active material filling step, the entire collector substrate is pressed (a plate pressing step). Then, the base material X is cut in directions orthogonal to the non-retaining area X1 into the same shape as the developed shapes of the first plate element 31P (excluding the terminal 311) and the second plate element 31Q (a cutting step). In this way, the first plate element 31P before welding of the collector terminal 311 and the second plate element 31Q in the developed state are formed. The collector terminal 311 is welded to the active material non-retaining portion 31A of the positive current collector which is to be the first plate element 31P (a terminal welding step). In this way, the first plate element 31P in the developed state is formed.

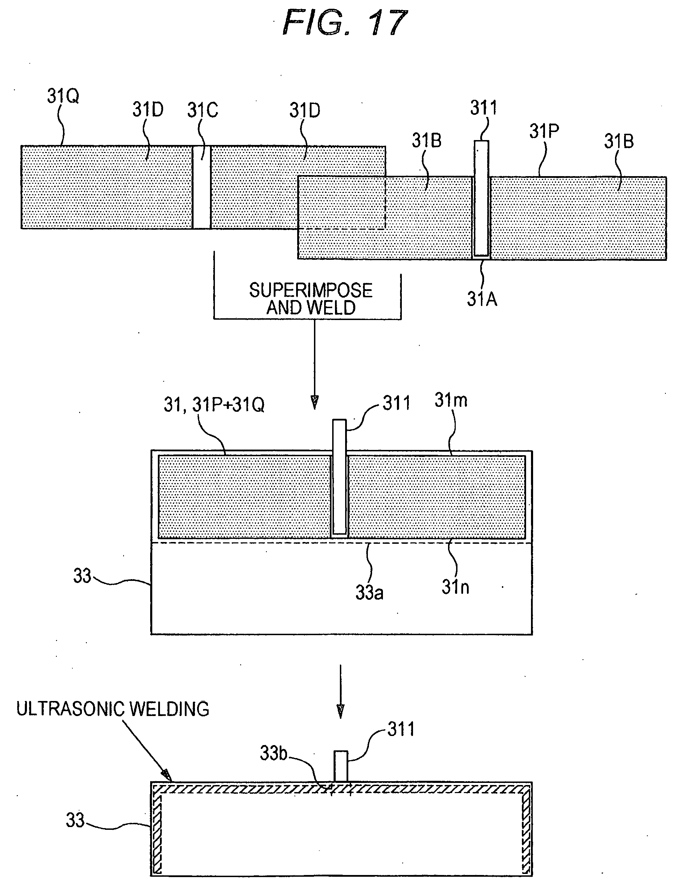

By superimposing the first plate element 31P and the second plate element 31Q formed in this manner on each other so that their outer periphery portions are substantially aligned with each other, and welding the active material non-retaining portion 31A of the first plate element 31P and the active material non-retaining portion 31C of the second plate element 31Q to each other, the positive electrode plate 31 in the developed state is formed (see Fig. 17).

The positive electrode plate 31 in the second embodiment may be formed by the other methods described in the first embodiment.

The formation and the method for manufacturing of the layered electrode group 3 and the cylindrical battery 100 are the same as those described in the first embodiment except for positive electrode plate 31. Therefore, for description of the formation and the method for manufacturing of the layered electrode group 3 and the cylindrical battery 100, the description in the first embodiment can be used.

<Effects of the Embodiment>

With the cylindrical battery 100 according to this embodiment formed in this manner, because the positive electrode plate 31 (first plate element 31P) is in the substantially U-shape formed by the two active material retaining portions 31B and the active material non-retaining portion 31A, and the active material non-retaining portion 31A is provided with the collector terminal 311, the common collector terminal 311 carries out the current collection of the two active material retaining portions 31B to suppress variations in current collecting efficiency to thereby improve the current collecting efficiency. Here, because the active material retaining portions 31D of the second plate element 31Q are in contact with the active material retaining portions 31B of the first plate element 31P, current collection of the second plate element 31Q can be carried out by the collector terminal 311 of the first plate element 31P. Moreover, the two active material retaining portions 31B can share the common collector terminal 311, which reduces the number of collector terminals 311 to be welded to simplify welding operation. Furthermore, by dividing the positive electrode plate 31 into the first plate element 31P and the second plate element 31Q, it is possible to reduce thickness of the positive current collectors in the respective plate elements 31P and 31Q to improve the filling rates of the positive active material into the respective positive current collectors. Moreover, by preventing rupture of the positive current collector in pressing after filling of the active material and preventing reduction in density of the positive current collector in the positive electrode plate 31, it is possible to suppress the internal resistance of the positive electrode plate 31. Furthermore, because the active material non-retaining portion 31C of the second plate element 31Q is welded to the active material non-retaining portion 31A of the first plate element 31P, it is possible to further suppress the internal resistance of the positive electrode plate 31.

In this embodiment, the active material retaining portions 31D of the second plate element 31Q are brought into contact with and superimposed on the respective active material retaining portions 31B on the both sides of the first plate element 31P, and the collector terminal 311 of the first plate element 31P can improve the current collecting efficiency of the second plate element 31Q. Here, because the first plate element 31P excluding the collector terminal 311 and the second plate element 31Q have the same shape, they may be superimposed and then folded into the U-shape, which improves workability. Moreover, because the active material non-retaining portion 31A of the first plate element 31P and the active material non-retaining portion 31C of the second plate element 31Q are welded to each other, it is easy to fold the positive electrode plate 31. Because the second plate element 31Q is formed by a single plate element, and also because the first plate element 31P before welding of the collector terminal 311 and the second plate element 31Q have the same shape, the number of parts can be further reduced.

<Examples>

Next, methods for manufacturing cylindrical batteries using positive electrode plates (Example A, Example B, and Example C) according to the each of the first and second embodiments and a conventional positive electrode plate (Comparative Example) and results of evaluation tests of the examples will be described below. The evaluation tests are measurement of a utilization rate of nickel hydroxide of the positive electrode plate (defined by IEC) and internal resistance of the battery.

Materials used for the cylindrical battery are as follows.

A positive active material was prepared by coating a surface of nickel hydroxide, including 3% by mass of zinc and 0.6% by mass of cobalt in a solid-solution state, with 7% by mass of cobalt hydroxide and subjecting the nickel hydroxide to air oxidation treatment at 110°C for an hour by using 18M sodium hydroxide solution. Aqueous solution in which thickener (carboxymethyl cellulose) was dissolved was added to the positive active material to prepare paste.

This paste was filled into foamed nickel of substrate surface density of 320 g/m$^2$, dried, and then pressed into predetermined thickness to thereby form each of the positive electrode plates of Examples A, B, and C. The positive electrode plate of Comparative Example was formed in the same manner as Examples A, B, and C except that the paste was filled into foamed nickel of substrate surface density of 500 g/m$^2$.

As the negative active material, hydrogen storage alloy having composition of $MmNi_{3.8}Co_{0.8}Mn_{0.3}Al_{0.3}$ milled into average particle size of 50 $\mu$m was used. Aqueous solution in which thickener (methylcellulose) was dissolved was added to 100 parts by mass of the alloy powder, 1 part by mass of binder (styrene-butadiene rubber) was further added to the alloy powder to obtain paste, and the paste was applied on both faces of a perforated steel sheet having thickness of 45 $\mu$m. After drying the steel sheet, it was pressed into predetermined thickness to be a negative electrode plate. The average particle size refers to a particle size of cumulative frequency of 50% in particle size distribution based on volume.

As a separator, polyolefin resin subjected to sulfonation treatment was used. As electrolyte solution, electrolyte solution having composition of 4M KOH+3M NaOH+0.8M LiOH was used.

Here, Example A is the positive electrode plate in the first embodiment in which the first plate element 31P excluding the collector terminal 311 and the second plate element 31Q have the same shape. Example B is the positive electrode plate in which a second plate element 31Q in a flat plate shape and formed by only an active material retaining portion 31D is brought in contact with the active material retaining portions 31B on the both sides of the first plate element 31P in the first embodiment, i.e., the positive electrode plate in the above-described embodiment but without the active material non-retaining portion 31C in the second plate element 31Q. Example C is the positive electrode plate in the second embodiment in which the first plate element 31P and the second plate element 31Q are welded to each other at their active material non-retaining portions. In Examples A to C, thickness of the current collector filled with the active material in each of the plate elements was 1.6 mm and thickness of the plate element after the pressing was 0.75 mm. On the other hand, Comparative Example is the single positive electrode plate. In Comparative Example, thickness of the current collector filled with the active material was 3 mm and thickness of the positive electrode plate after the pressing was 1. 5 mm.

Each of the batteries after assembly was subjected to initial formation under the following conditions and completed. Constant current charge was carried out at 20°C and 100 mA for 12 hours, and then constant current discharge was carried out at 200 mA until the voltage of the battery reached to 1 V. This cycle was repeated twice. Then, each of the batteries was maintained at 40°C for 48 hours. Constant current charge was carried out at 20°C and 100 mA for 12 hours, and then constant current discharge was carried out at 200 mA until the voltage of the battery reached to 1 V. This cycle was repeated twice to complete the initial formation.

The utilization rate of nickel hydroxide of the positive electrode plate (defined by IEC) was measured in the following manner. For each of the above batteries, a charge-discharge cycle, in which constant current charge was carried out at 20°C and 0.1 ItA for 16 hours and constant current discharge was carried out at 20°C and 0.2 ItA until the voltage of the battery reached to 1.0 V, was repeated three times. "Discharge capacity" of the battery in each of the cycles at this time was measured. "Theoretical capacity" in this test refers to theoretical capacity of the positive electrode plate, which is a value calculated by using a filling amount of the nickel hydroxide and the theoretical capacity. A utilization rate is a value calculated by using the following equation.

$$\text{Utilization rate (\%)} = \text{discharge capacity/theoretical capacity} \times 100$$

Internal resistance of the positive electrode plate is a value obtained by measuring resistance of the terminal of the battery and a battery can bottom at 20°C by using Hioki 3560 ACm$\Omega$ HiTESTER.

Table 1

| | Theoretical capacity (mAh) | Discharge capacity 1cy (mAh) | Discharge capacity 2cy (mAh) | Discharge capacity 3cy (mAh) | Utilization rate 1cy (%) | Utilization rate 2cy (%) | Utilization rate 3cy (%) | Internal resistance (m$\Omega$) |
|---|---|---|---|---|---|---|---|---|
| Example A | 1028 | 988 | 984 | 983 | 96.1 | 95.7 | 95.6 | 36.3 |
| | 1037 | 984 | 984 | 982 | 94.9 | 94.9 | 94.7 | 37.8 |
| Example B | 1040 | 969 | 975 | 976 | 93.1 | 93.8 | 93.8 | 40.0 |
| | 1041 | 978 | 976 | 976 | 93.9 | 93.7 | 93.7 | 36.9 |
| Example C | 1038 | 986 | 985 | 983 | 95.0 | 94.9 | 94.7 | 31.9 |
| | 1039 | 997 | 993 | 990 | 96.0 | 95.6 | 95.3 | 32.3 |
| Comparative Example | 900 | 900 | 898 | 894 | 92.1 | 91.9 | 91.5 | 42.4 |
| | 890 | 890 | 888 | 883 | 91.3 | 91.0 | 90.6 | 42.4 |

As can be seen from Table 1 shown above, utilization rate of nickel hydroxide was increased and discharge capacity was able to be increased in Examples A to C as compared with those in Comparative Example. Moreover, the internal resistance was able to be reduced in Examples A to C as compared with that in Comparative Example. Furthermore, the internal resistance was able to be further reduced in Example C formed by welding the first plate element and the second plate element as compared with those in Examples A and B formed without welding the first plate element and the second plate element.

<Other Modified Embodiments>

Note that the present invention is not limited to the above-described embodiments.

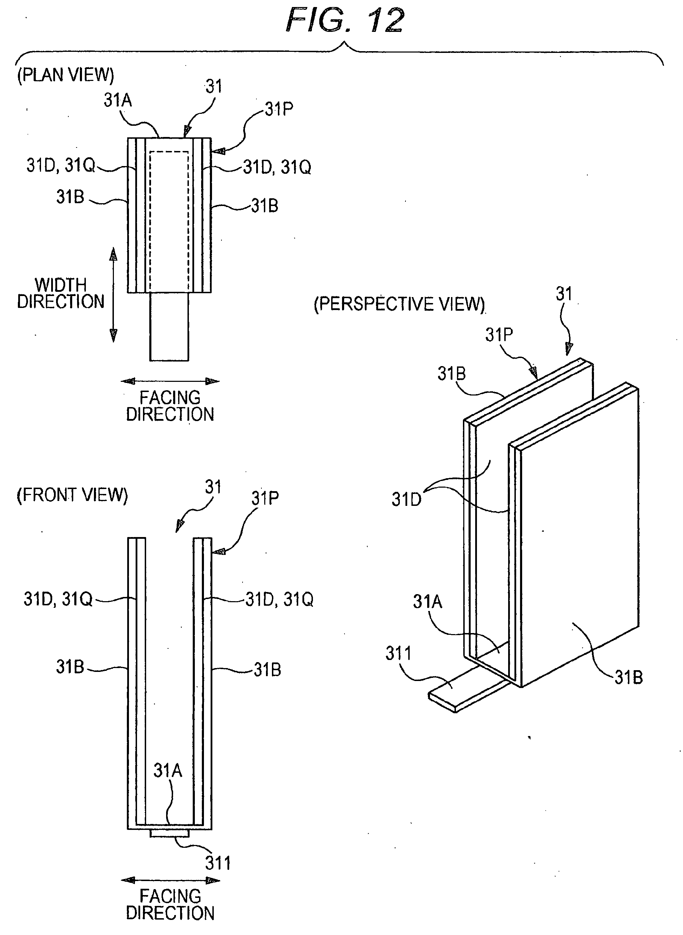

For example, although the second plate element 31Q in the first embodiment has the active material non-retaining portion 31C and the active material retaining portions 31D formed on both sides of the active material non-retaining portion 31C similarly to the first plate element 31P, second plate elements 31Q may be formed by only an active material retaining portions 31D substantially in flat plate shapes and to be in contact with and superimposed on an active material retaining portions 31B on both sides of a first plate element 31P, as shown in Fig. 12, similarly to Example B described above. In this case, the second plate element 31Q may be provided on only one of the active material retaining portions 31B on the both sides of the first plate element 31P.

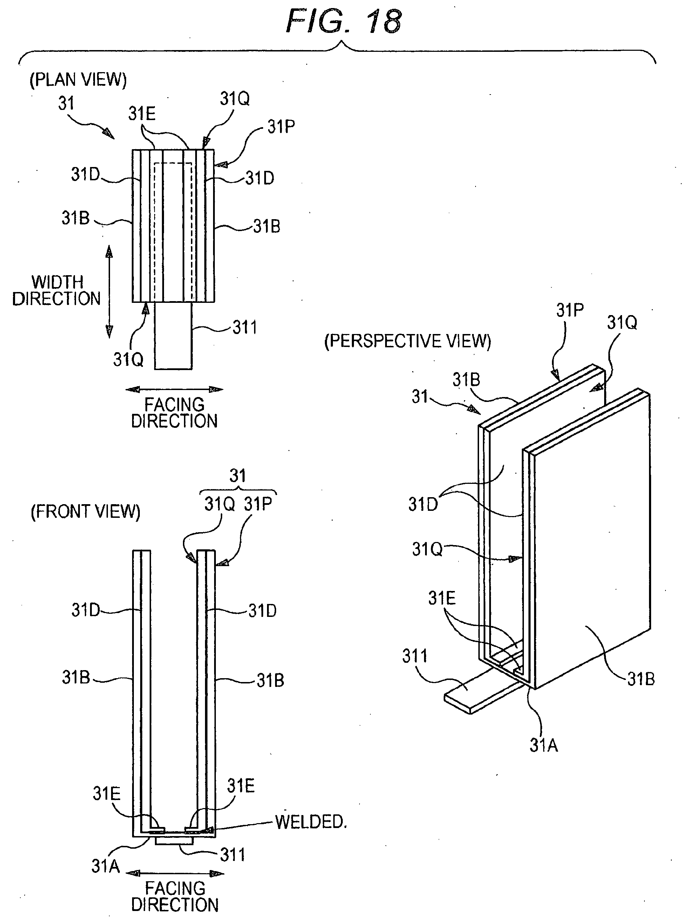

For example, although the second plate element 31Q in the second embodiment has the active material non-retaining portion 31C and the active material retaining portions 31D formed on both sides of the active material non-retaining portion 31C similarly to the first plate element 31P, second plate elements 31Q may include active material retaining portions 31D substantially in flat plate shapes and to be in contact with and superimposed on active material retaining portions 31B on both sides of a first plate element 31P and welded portions 31E to be welded to an active material non-retaining portion 31A of the first plate element 31P, as shown in Fig. 18. Each of the welded portions 31E has a substantially linear shape, does not retain an active material, and is formed along one side of the active material retaining portion 31D.

In this case, the second plate element 31Q may be provided on only one of the active material retaining portions 31B on the both sides of the first plate element 31P.

Although the second plate element 31Q is superimposed on an inner side of the first plate element 31P in the first and second embodiments, the second plate element 31Q may be superimposed on an outer side of the first plate element 31P or two second plate elements 31Q may be superimposed on both the inner and outer sides of the first plate element 31P.

Furthermore, although the developed first plate element and the developed second plate element are welded to each other and then folded in the second embodiment, a folded first plate element and a folded second plate element may be welded to each other.

Although the positive electrode plate 31 in each of the first and second embodiments is formed by the single first plate element 31P and the single second plate element 31Q, a positive electrode plate 31 may include a plurality of first plate elements 31P and a plurality of second plate elements 31Q.

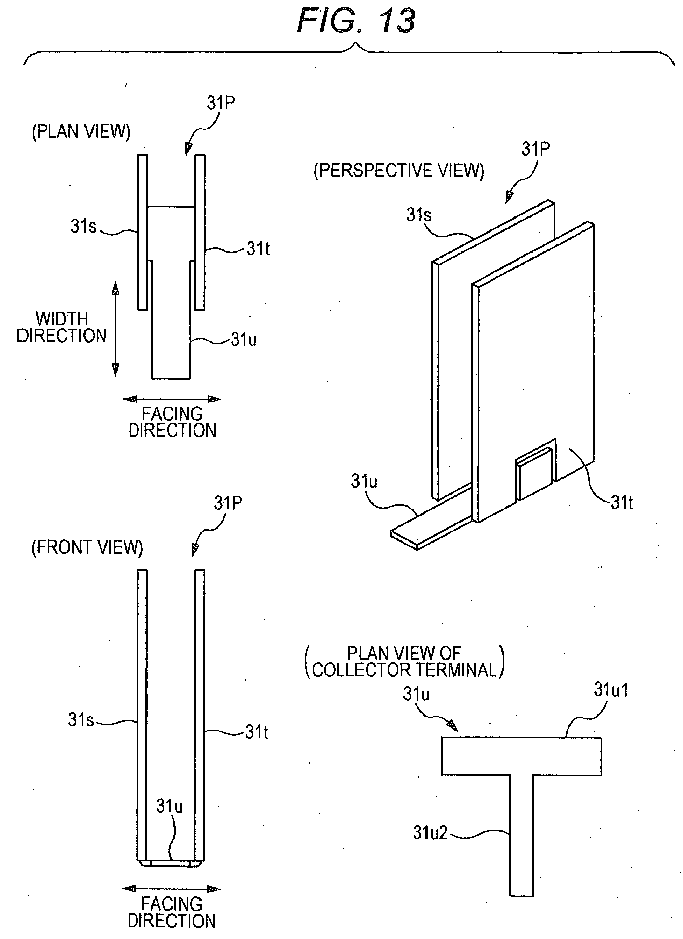

Moreover, although the active material non-retaining portion 31A and the active material retaining portions 31B are formed by the single positive current collector in the first plate element 31P in each of the first and second embodiments, the present invention is not limited thereto. Specifically, as shown in Fig. 13, a first plate element 31P may include two active material retaining bodies 31s and 31t formed by positive current collectors retaining a positive active material and a collector terminal 31u which is a conductive member connecting the two active material retaining bodies 31s and 31t. The active material retaining bodies 31s and 31t have the same shape and formed by filling the positive active material into foamed nickel in substantially rectangular shapes. At a portion of each of the active material retaining bodies 31s and 31t, an active material removed portion 31x to which the collector terminal 31u is to be welded is formed. The collector terminal 31u has a substantially T-shape in a plan view, and left and right end portions of a T-shaped horizontal portion 31u1 are respectively welded to the active material removed portions 31x of the active material retaining bodies 31s and 31t. In this developed state, a T-shaped vertical portion 31u2 of the collector terminal 31u is an extending portion extending outward from the active material retaining bodies 31s and 31t in a width direction of the active material retaining bodies 31s and 31t.

The positive electrode plate 31 is folded into a substantially U-shape at the T-shaped horizontal portion 31u1 of the collector terminal 31u so that the two active material retaining bodies 31s and 31t face each other, and the T-shaped vertical portion 31u2 extends outward toward one side in a width direction orthogonal to a direction in which the two active material retaining bodies 31s and 31t face each other.

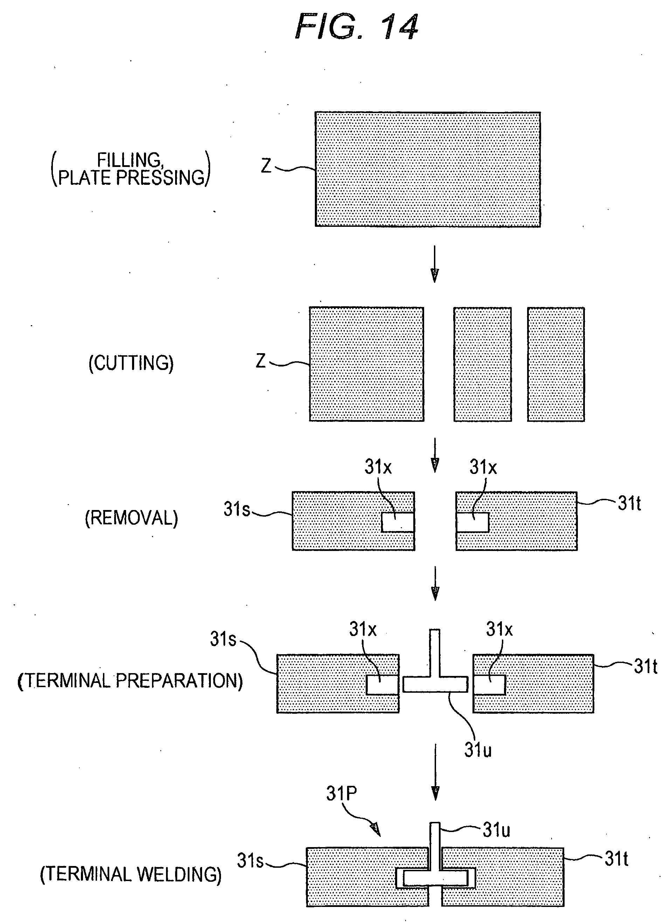

Next, a method for manufacturing the first plate element 31P formed in this manner will be described briefly. As shown in Fig. 14, the active material is filled into entire base material Z (collector substrate) made of foamed nickel in a long shape (an active material filling step). After the active material filling step, the entire collector substrate is pressed (a plate pressing step). Next, the base material Z filled with the active material is cut into sizes of the active material retaining bodies 31s and 31t (a cutting step). Then, in order to form the substantially rectangular active material removed portions 31x at central portions of short sides of the cut active material retaining bodies 31s and 31t, the positive active material is removed by ultrasonic removal or the like (an active material removing step). Then, the respective end portions of the T-shaped horizontal portion 31u1 of the T-shaped collector terminal 31u are welded to the two active material removed portions 31x (a terminal welding step). The T-shaped terminal is not limited to an integral body but may be formed by welding two reed-shaped collector terminals into a T-shape. Two active material retaining bodies 31s and 31t may be coupled by a coupling member other than a collector terminal, and the collector terminal may be welded to the coupling member. A second plate element may be formed by coupling two active material retaining bodies 31s and 31t with a coupling member which is a conductive member other than a collector terminal.

Although the structure in which the positive electrode plate and the negative electrode plate are folded into the substantially angular U-shape as a form of folding into the substantially U-shape has been described as shapes of the positive electrode plate and the negative electrode plate, the positive electrode plate and the negative electrode plate may be folded into a substantially V-shape or literally folded into the substantially U-shape.

Although the layered electrode group 3 in each of the first and second embodiments is formed by laminating the single positive electrode plate 31 and the two negative electrode plates 32, it may be formed by laminating a plurality of positive electrode plates 31 and a plurality of negative electrode plates 32.

Moreover, it is possible to exchange the structures between the positive electrode plate and the negative electrode plate in each of the first and second embodiments. In other words, the collector terminal 311 of the positive electrode plate may be welded to the inner face of the battery case. The negative electrode plate may be formed by a first plate element and a second plate element.

The each of the first and second embodiments of the present invention may be applied to a storage battery such as a lithium-ion storage battery besides the alkaline storage battery or may be applied to a primary battery. The present invention may be applied not only to the cylindrical battery but also batteries in other shapes such as a prismatic cell.

It is needless to say that the present invention is not limited to the above-described embodiments but may be changed in various ways without departing from the gist of the invention.

According to the present invention formed in this manner, the two active material retaining portions can share the collector terminal to thereby reduce the number of collector terminals. Moreover, because the electrode plate is divided into the first plate element and the second plate element, it is possible to reduce the internal resistance of the electrode plate while increasing filling performance of the active material as an entire electrode.

**Claims**

**1.**   An electrode plate (31) formed by current collectors retaining an active material, the electrode plate comprising:

a first plate element (31P) including an active material non-retaining portion (31A), which does not retain the active material, and active material retaining portions (31B, 31B) in substantially flat plate shapes, which retain the active material and are formed on both sides of the active material non-retaining portion (31A), the active material non-retaining portion being folded so that the active material retaining portions (31B, 31B) face each other; and
a second plate element (31Q) including an active material non-retaining portion (31C), which does not retain an active material, and an active material retaining portion (31D, 31D) in a substantially flat plate shape which retains the active material,
wherein the active material retaining portion (31D, 31D) of the second plate element (31Q) is in contact with and superimposed on the active material retaining portions (31B, 31B) of the first plate element (31P), and the active material non-retaining portion (31C) of the second plate element (31Q) is in contact with the active material non-retaining portion (31A) of the first plate element (31P).

**2.**   The electrode plate (31) according to claim 1, wherein
the active material retaining portion of the second plate element (31Q) includes active material retaining portions (31D, 31D) in substantially flat plate shapes, which are formed on both sides of the active material non-retaining portion, the active material non-retaining portion (31C) being folded so that the active material retaining portions (31D, 31D) on the both sides face each other, and
the active material retaining portions (31D, 31D) on the both sides of the second plate element (31Q) are in contact with and superimposed on the active material retaining portions (31B, 31B) of the first plate element (31P).

**3.**   The electrode plate (31) according to claim 1 or 2, wherein the active material non-retaining portion (31C) of the second plate element (31Q) is not welded to the active material non-retaining portion (31A) of the first plate element (31P).

4. The electrode plate (31) according to claim 1 or 2, wherein the active material non-retaining portion (31A) of the first plate element (31P) and the active material non-retaining portion (31C) of the second plate element (31Q) are welded to each other.

5. The electrode plate (31) according to any one of claims 1 to 4, wherein the current collectors are three-dimensional metal porous bodies.

6. A layered electrode group (3) comprising the electrode plate (31) according to any one of claims 1 to 5.

7. A battery (100) comprising the electrode plate (31) according to any one of claims 1 to 5.

8. A cylindrical battery (100) comprising a layered electrode group (3) including the layered electrode plate according to any one of claims 1 to 5, and housed in a cylindrical battery case (2).

**Patentansprüche**

1. Elektrodenplatte (31), ausgebildet durch Stromkollektoren, die ein Aktivmaterial zurückhalten, wobei die Elektrodenplatte Folgendes umfasst:

ein erstes Plattenelement (31P) umfassend einen Aktivmaterial nicht zurückhaltenden Abschnitt (31A), der das Aktivmaterial nicht zurückhält, und Aktivmaterial zurückhaltende Abschnitte (31B, 31B) mit im Wesentlichen flacher Plattenform, die das Aktivmaterial zurückhalten und beidseits des Aktivmaterial nicht zurückhaltenden Abschnitts (31A) ausgebildet sind, wobei der Aktivmaterial nicht zurückhaltende Abschnitt so abgekantet ist, dass die Aktivmaterial zurückhaltenden Abschnitte (31B, 31B) einander gegenüberliegen; und

ein zweites Plattenelement (31Q) umfassend einen Aktivmaterial nicht zurückhaltenden Abschnitt (31C), der kein Aktivmaterial zurückhält, und einen Aktivmaterial zurückhaltenden Abschnitt (31D, 31D) mit im Wesentlichen flacher Plattenform, der das Aktivmaterial zurückhält,

wobei der Aktivmaterial zurückhaltende Abschnitt (31D, 31D) des zweiten Plattenelements (31Q) mit den Aktivmaterial zurückhaltenden Abschnitten (31B, 31B) des ersten Plattenelements (31P) in Kontakt steht und diese überlagert und

der Aktivmaterial nicht zurückhaltende Abschnitt (31C) des zweiten Plattenelements (31Q) mit dem Aktivmaterial nicht zurückhaltenden Abschnitt (31A) des ersten Plattenelements (31P) in Kontakt steht.

2. Elektrodenplatte (31) nach Anspruch 1, wobei der Aktivmaterial zurückhaltende Abschnitt des zweiten Plattenelements (31Q) Aktivmaterial zurückhaltende Abschnitte (31D, 31D) mit im Wesentlich flacher Plattenform umfasst, die beidseits des Aktivmaterial nicht zurückhaltenden Abschnitts ausgebildet sind, wobei der Aktivmaterial nicht zurückhaltende Abschnitt (31C) so abgekantet ist, dass die Aktivmaterial zurückhaltenden Abschnitte (31D, 31D) beider Seiten einander gegenüberliegen, und die Aktivmaterial zurückhaltenden Abschnitte (31D, 31D) beidseits des zweiten Plattenelements (31Q) mit den Aktivmaterial zurückhaltenden Abschnitten (31B, 31B) des ersten Plattenelements (31P) in Kontakt stehen und diese überlagern.

3. Elektrodenplatte (31) nach Anspruch 1 oder 2, wobei der Aktivmaterial nicht zurückhaltende Abschnitt (31C) des zweiten Plattenelements (31Q) mit dem Aktivmaterial nicht zurückhaltenden Abschnitt (31A) des ersten Plattenelements (31P) nicht verschweißt ist.

4. Elektrodenplatte (31) nach Anspruch 1 oder 2, wobei der Aktivmaterial nicht zurückhaltende Abschnitt (31A) des ersten Plattenelements (31P) und der Aktivmaterial nicht zurückhaltende Abschnitt (31C) des zweiten Plattenelements (31Q) miteinander verschweißt sind.

5. Elektrodenplatte (31) nach einem der Ansprüche 1 bis 4, wobei die Stromkollektoren dreidimensionale poröse Metallkörper sind.

6. Geschichtete Elektrodengruppe (3), die die Elektrodenplatte (31) nach einem der Ansprüche 1 bis 5 umfasst.

**7.** Batterie (100), die die Elektrodenplatte (31) nach einem der Ansprüche 1 bis 5 umfasst.

**8.** Zylindrische Batterie (100), die eine geschichtete Elektrodengruppe (3), die die geschichtete Elektrodenplatte nach einem der Ansprüche 1 bis 5 aufweist, umfasst und in einem zylindrischen Batteriegehäuse (2) untergebracht ist.

## Revendications

**1.** Électrode plane (31) constituée de collecteurs de courant retenant une matière active, l'électrode plane comprenant :

un premier élément formant plaque (31P) comprenant une partie (31A) ne retenant pas la matière active, qui ne retient pas la matière active, et des parties (31B, 31B) retenant la matière active, ayant sensiblement la forme de plaques planes, qui retiennent la matière active et qui sont formées des deux côtés de la partie (31A) ne retenant pas la matière active, la partie ne retenant pas la matière active étant pliée, de manière que les parties (31B, 31B) retenant la matière active soient en regard l'une de l'autre ; et
un second élément formant plaque (31Q) comprenant une partie (31C) ne retenant pas la matière active, qui ne retient pas de matière active, et une partie (31D, 31D) retenant la matière active ayant sensiblement une forme de plaque plane, qui retient la matière active,
dans laquelle la partie (31D, 31D) retenant la matière active du second élément formant plaque (31Q) est au contact des parties (31B, 31B) retenant la matière active du premier élément formant plaque (31P), auxquelles elle est superposée, et
la partie (31C) ne retenant pas la matière active du second élément formant plaque (31Q) est au contact de la partie (31A) ne retenant pas la matière active du premier élément formant plaque (31P).

**2.** Électrode plane (31) selon la revendication 1, dans laquelle
la partie retenant la matière active du second élément formant plaque (31Q) comprend des parties (31D, 31D) retenant la matière active, ayant sensiblement la forme de plaques planes, qui sont formées des deux côtés de la partie ne retenant pas la matière active, la partie (31C) ne retenant pas la matière active étant pliée, de manière que les parties (31D, 31D) retenant la matière active des deux côtés soient en regard l'une de l'autre, et
les parties (31D, 31D) retenant la matière active, des deux côtés du second élément formant plaque (31Q), sont au contact des parties (31B, 31B) retenant la matière active du premier élément formant plaque (31P), auxquelles elles sont superposées.

**3.** Électrode plane (31) selon la revendication 1 ou 2, dans laquelle la partie (31C) ne retenant pas la matière active du second élément formant plaque (31Q) n'est pas soudée à la partie (31A) ne retenant pas la matière active du premier élément formant plaque (31P).

**4.** Électrode plane (31) selon la revendication 1 ou 2, dans laquelle la partie (31A) ne retenant pas la matière active du premier élément formant plaque (31P) et la partie (31C) ne retenant pas la matière active du second élément formant plaque (31Q) sont soudées l'une à l'autre.

**5.** Électrode plane (31) selon l'une quelconque des revendications 1 à 4, dans laquelle les collecteurs de courant sont des corps métalliques poreux en trois dimensions.

**6.** Groupe d'électrodes en couches (3) comprenant l'électrode plane (31) selon l'une quelconque des revendications 1 à 5.

**7.** Pile (100) comprenant l'électrode plane (31) selon l'une quelconque des revendications 1 à 5.

**8.** Pile cylindrique (100) comprenant un groupe d'électrodes en couches (3) comportant l'électrode plane en couches selon l'une quelconque des revendications 1 à 5, et logée dans un boîtier (2) de pile cylindrique.

# FIG. 1

# FIG. 2

LAYERED DIRECTION L

## FIG. 3

(PLAN VIEW)

31
31Q 31P

31C

31D — 31D

31B — 31B

311

WIDTH
DIRECTION

FACING
DIRECTION

(PERSPECTIVE VIEW)

31
31P 31Q

31B

31D

31C

311

31A

31B

(FRONT VIEW)

31
31Q 31P

31D — 31D

31B — 31B

31C

31A — 311

FACING
DIRECTION

20

# FIG. 4

(DEVELOPED VIEW OF FIRST PLATE ELEMENT)

(DEVELOPED VIEW OF SECOND PLATE ELEMENT)

## FIG. 5

X

(PRESSING)

X1

↓

X

FILLING,
PLATE PRESSING

X2

X1

CUTOFF LINE

X2

↓

X

X2

(CUTTING)

X1

X2

31Q

↓

31B    311    31A    31B

(TERMINAL WELDING)

31P

## FIG. 6

(PLAN VIEW)

FACING DIRECTION

(FRONT VIEW)

FACING DIRECTION

(PERSPECTIVE VIEW)

# FIG. 7

# FIG. 8

COATING DIRECTION ——→

(COATING)

Y

Y2

Y1

Y2

(PUNCHING)

Y

Y2

Y1

CUTOFF LINE

32C

Y2

(CUTTING)

Y

Y2

Y1

Y2

# FIG. 9

# FIG. 10

SUPERIMPOSE

ULTRASONIC WELDING

# FIG. 11

## FIG. 12

(PLAN VIEW)

31A 31 31P

31D, 31Q 31D, 31Q

31B 31B

WIDTH DIRECTION

FACING DIRECTION

(PERSPECTIVE VIEW) 31

31P

31B

31D

31A

311 31B

(FRONT VIEW) 31 31P

31D, 31Q 31D, 31Q

31B 31B

31A

311

FACING DIRECTION

29

## FIG. 13

(PLAN VIEW)

31P

31s

31t

31u

WIDTH
DIRECTION

FACING
DIRECTION

(PERSPECTIVE VIEW)

31P

31s

31u

31t

(FRONT VIEW)

31P

31s

31t

31u

FACING
DIRECTION

$\left(\begin{array}{c}\text{PLAN VIEW OF}\\\text{COLLECTOR TERMINAL}\end{array}\right)$

31u

31u1

31u2

# FIG. 14

$\begin{pmatrix} \text{FILLING,} \\ \text{PLATE PRESSING} \end{pmatrix}$    Z

(CUTTING)    Z

(REMOVAL)    31s    31x    31x    31t

(TERMINAL PREPARATION)    31s    31x    31x    31t    31u

(TERMINAL WELDING)    31P    31u    31s    31t

## FIG. 15

(PLAN VIEW)

31
31Q 31P

31C

31D — 31D

31B — 31B

WIDTH
DIRECTION

311

FACING
DIRECTION

(PERSPECTIVE VIEW)

31
31P 31Q

31B

31D

31C

311

31A

31B

(FRONT VIEW)

31
31Q 31P

31D — 31D

31B — 31B

31C

WELDED.

31A — 311

FACING
DIRECTION

# FIG. 16

# FIG. 17

SUPERIMPOSE
AND WELD

ULTRASONIC WELDING

## FIG. 18

(PLAN VIEW)

31  31E  31Q
31P
31D  31D
31B  31B

WIDTH
DIRECTION

31Q  311

FACING
DIRECTION

(PERSPECTIVE VIEW)

31P  31Q
31B
31
31D
31Q
31E
311
31A
31B

(FRONT VIEW)

31
31Q  31P

31D  31D
31B  31B

31E  31E

WELDED.

31A  311

FACING
DIRECTION

**EP 2 747 174 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012277045 A
- JP 2012277047 A

- JP 11185767 A